# EUROPEAN PATENT APPLICATION

(11) **EP 2 006 066 A2**
(43) Date of publication of application: **24.12.2008**
(21) Application number: 08157984.9
(22) Date of filing: 10.06.2008
(51) Int. Cl.: B29C 45/00, B29C 65/00

(54) **Moulded-in-colour panel and method for moulding such**

(30) Priority: 22.06.2007 US 766813
(71) Applicant: Ford Global Technologies, LLC, Dearborn, MI 48126 (US)
(72) Inventor: Fernholz, Kedzie, New Boston, MI 48164 (US); Brown, LaRon, Detroit, MI 48207 (US); Staniszewski, Stanley, Grosse Pointe Woods, MI 48236 (US)
(74) Representative: Messulam, Adam Clive

(57) **Abstract**

A method for moulding a moulded-in-colour panel 16 in a mould 10 includes providing a mould 10 having a first mould member 12 and a second mould member 14. The first mould member 12 has an appearance portion forming surface 20 and the second mould member 14 has a concealed portion forming surface 22 corresponding with the appearance portion forming surface 20. The concealed portion forming surface 22 is free of any protuberances and ancillary structural members so as to permit resin injected into the mould 10 to flow freely without disturbance thereby creating ideal surface characteristics on an appearance portion 21 of the panel 16.

## Description

The present invention relates to moulded-in-colour panels and moulds for creating moulded-in-colour panels.

Vehicle panels are an example of moulded-in-colour panels. Vehicle panels may be on the interior or exterior of a vehicle, commonly have surfaces, which are exposed to a viewable environment. These exposed surfaces are often referred to as class-A surfaces. It is desirable to create these class-A surfaces to have few or no surface defects or flaws when compared to non class-A surfaces. Since class-A surfaces are exposed to a viewable environment these surfaces are formed using tighter tolerances and greater detail. Non class-A surfaces are not exposed in the viewable environment and may have visible surface defects and flaws.

Vehicle panels with class-A surfaces are not typically injection-moulded or compression-moulded unless the vehicle panels are painted in a secondary painting operation, covering surface defects. Painting the vehicle panel in a secondary painting operation requires additional time and cost to create the vehicle panel. Paint is also susceptible to peeling, chipping, blistering and/or de-lamination.

Moulded-in-colour plastics are a lower cost option for programs to consider instead of current painted technologies and/or other decorative alternatives, such as paint film or other laminates. Moulded-in-colour plastics are also environmentally friendly because moulded-in-colour plastics do not require a secondary painting process so moulded-in-colour plastics may be easily recycled and manufacturing of moulded-in-colour plastics does not generate volatile organic compounds.

It is an object of this invention to provide a method for creating a moulded-in-colour panel.

According to a first aspect of the invention there is provided a method for manufacturing a moulded-in-colour panel the method comprising providing a mould having a first mould member and a second mould member wherein one of the first mould member and the second mould member has an appearance portion forming surface and the other of the first mould member and the second mould member has a concealed portion forming surface corresponding to the appearance portion forming surface for forming a concealed portion of the moulded-in-colour panel, injecting moulded-in-colour resin into the mould and cooling the moulded-in-colour resin to form a moulded-in-colour panel characterised in that the concealed portion forming surface has a substantially smooth surface free from surface discontinuities so as to minimise surface disturbances in the appearance portion of the moulded-in-colour panel and the method further comprises attaching at least one ancillary structural member to the concealed portion of the moulded-in-colour panel after moulding of the moulded-in-colour panel is complete.

Injecting moulded-in-colour resin may comprise injecting moulded-in-colour metallic resin.

The appearance portion may be a front surface of the moulded-in-colour panel and the concealed portion may be a back surface of the moulded-in-colour panel.

A substantially smooth surface free from surface discontinuities may be a surface free of any protuberances and ancillary structural members.

Attaching at least one ancillary structural member to the concealed portion of the panel may comprise welding at least one ancillary structural member to the concealed portion of the panel

The method may further comprise ejecting the moulded-in-colour panel from the mould before attaching the at least one ancillary structural member to the concealed portion of the moulded-in-colour panel.

The method may further comprise forming the at least one ancillary structural member ready for attachment to the concealed portion of the moulded-in-colour panel.

Forming may comprise injection moulding the at least one ancillary structural member.

Attaching at least one ancillary structural member to the concealed portion of the panel may comprise laser welding the at least one ancillary structural member to the concealed surface of the moulded-in-colour panel.

The method may comprise injection moulding the at least one ancillary structural member prior to welding the at least one ancillary structural member to the concealed portion of the moulded-in-colour panel.

The method may further comprise conveying the moulded-in-colour panel to a welding station to weld the at least one ancillary structural member to the concealed portion of the moulded-in-colour panel.

The mould may have a cavity as the first mould member and a core as the second mould member and the cavity may have a very smooth forming surface for forming the appearance portion of the moulded-in-colour panel and the core may have a generally smooth forming surface for forming the concealed portion of the moulded-in-colour panel.

A very smooth forming surface may be a polished surface.

A generally smooth forming surface may be a surface without protuberances or projections.

According to a second aspect of the invention there is provided moulded-in-colour panel in which the moulded-in-colour panel is formed by a method in accordance with said first aspect of the invention.

The moulded-in-colour panel may be a moulded-in-colour exterior panel for a motor vehicle.

According to a third aspect of the invention there is provided a system for manufacturing a moulded-in-colour element in a mould, the system comprising an injection moulding machine having a first mould member and a second mould member wherein one of the first mould member and the second mould member has an appearance portion forming surface and the other of the first mould member and the second mould member has a concealed portion forming surface corresponding with the appearance portion forming surface for forming a concealed portion, characterised in that the system further comprises a laser welding station to weld after moulding of the moulded-in-colour element at least one ancillary member to the concealed portion of the moulded-in-colour element and that the concealed portion forming surface is substantially free of any surface discontinuities so that when moulded-in-colour resin is injected into the mould it can flow freely without disruption over the first mould member and the second mould member so as to form the moulded-in-colour element with ideal surface characteristics on the appearance portion of the moulded-in-colour element.

A surface free of any surface discontinuities may be a surface free of any protuberances and ancillary members.

Metallic moulded-in-colour resin may be injected in the mould.

The moulded-in-colour element may be a metallic moulded-in-colour element.

The metallic moulded-in-colour element may be a metallic moulded-in-colour exterior panel for a motor vehicle.

The invention will now be described by way of example with reference to the accompanying drawing of which:-
Figure 1 is a side elevation view of a mould;
Figure 2 is top plan view of the mould of Figure 1;
Figure 3 is a cross-section view of the mould of Figure 2 taken along line 3-3 on Figure 2;
Figure 4 is a schematic view of a welding station embodiment for joining a panel and a structural component together;
Figure 5 is a cross-section view of a panel formed in the mould of Figure 3 and a plurality of structural components;
Figure 6 is another cross-section view of the panel and the plurality of structural components of Figure 5 joined together; and
Figure 7 is an enlarged partial cross-section view of a panel joined together with a structural component.

As required, detailed embodiments of the present invention are disclosed herein; however, it is to be understood that the disclosed embodiments are exemplary of the invention that may be embodied in various and alternative forms. The figures are not necessarily to scale and some features may be exaggerated or minimized to show details of particular components.

Moulded-in-colour panels may be formed using injection-moulding or compression-moulding. When forming moulded-in-colour panels, creating class-A surfaces results in a visible appearance of knit lines, mould flow lines, and sink marks. Although moulded-in-colour plastics offer benefits, it is still extremely difficult to mould parts in colour without visible appearance of knit lines, flow lines or sink marks on a class-A surface. In addition, when metallic moulded-in-colour resin is utilized, creating a defect-free class-A surface is extremely difficult because metallic moulded-in-colour resin has a high propensity for surface defects.

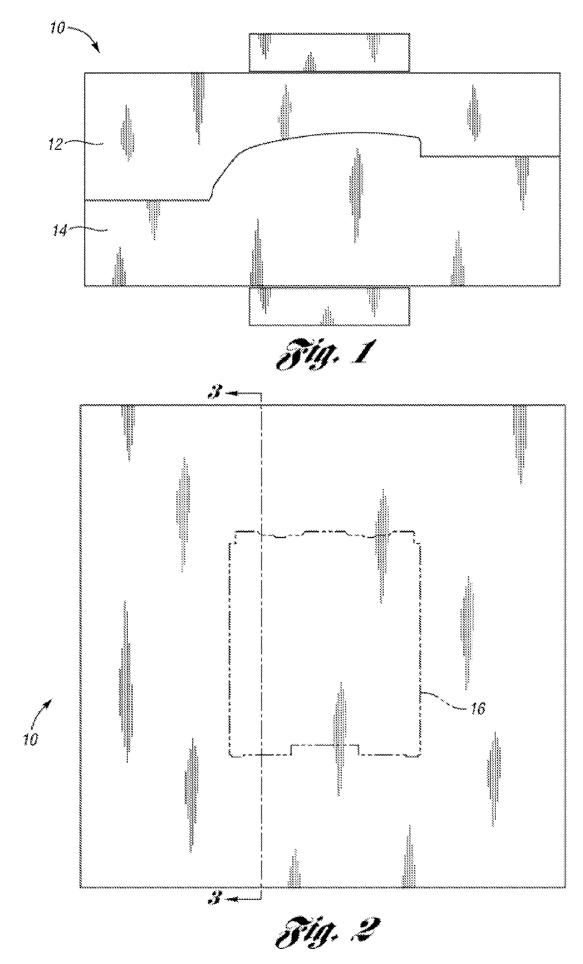

Referring now to Figure 1, a mould 10 for creating a moulded-in-colour panel 16 is illustrated and referenced generally by numeral 10. The panel 16 may be any suitable moulded-in-colour panel and in one embodiment, the panel is a vehicle panel 16 which is employed on an interior or exterior of a vehicle. Of course, any moulded-in-colour panel is contemplated within the scope of the present invention.

The mould 10 has a first mould half 12 and a second mould half 14. In another embodiment, the mould 10 may have three or more mould portions, which collectively form the mould 10. Any number of mould portions is contemplated within the scope of the present invention.

In one embodiment, the first mould half 12 is referred to as a cavity because the first mould half 12 may have a substantial recess for receiving the second mould half 14. The second mould half 14 is referred to as a core because the second mould half 14 has a substantial projection which is received in the cavity 12.

The core 14 may be moveable relative to the cavity 12. By providing a stationary cavity 12 and a moveable core 14, a vehicle panel may be retained within the mould 10 on the core 14 after moulding the vehicle panel, which may be generally easily ejected or removed after the mould 10 is opened. It is also contemplated within the scope of the invention that the cavity 12 may be moveable while the core 14 is stationary. If three or more mould portions are employed, at least one mould portion may be moveable relative to at least a second mould portion.

Referring now to Figure 2, a top plan view of the mould 10 of Figure 1 is illustrated. To create the vehicle panel 16, a heated resin is injected into the mould 10 through a resin inlet such as a gate.

The heated resin has moulded-in-colour so that a secondary painting operation is not required. In one embodiment, the heated resin and the colourant may be separately injected into the mould 10. The resin may have material properties comparable with a thermoplastic polyolefin (TPO) or a polycarbonate-acrylonitrile butadiene styrene (PC/ABS).

The resin may contain metallic moulded-in-colour for vehicle panel applications for use in the interior of the vehicle, for example. Using a metallic moulded-in-colour resin in a typical mould creates large amounts of surface defects, which are not visually appealing. The metallic moulded-in-colour resin may achieve a low gloss, quality, metallic appearance once injection-moulded or compression-moulded. The resulting vehicle panel delivers an enhanced metallic appearance over paint and offers a low-cost option to using aluminium and/or decorative films.

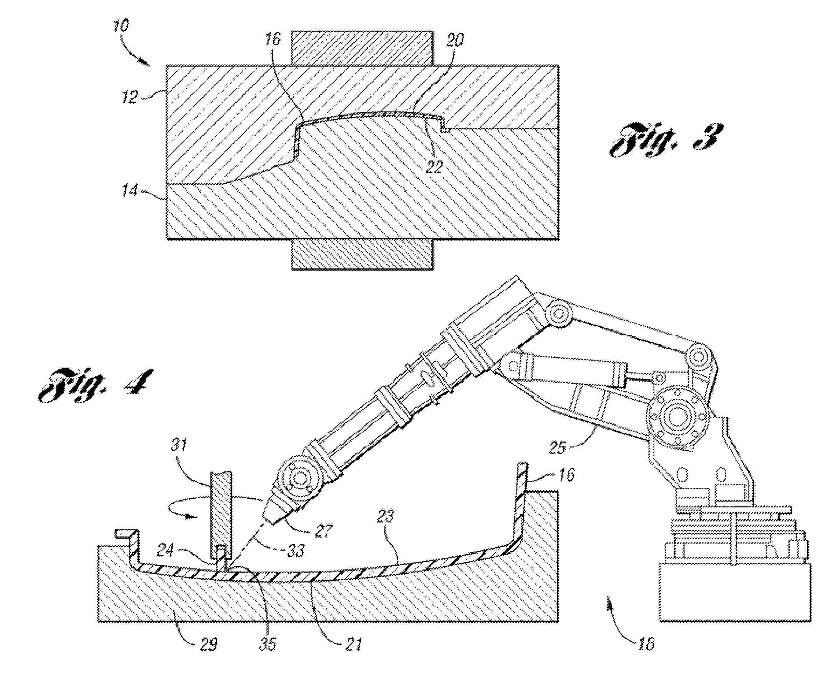

Referring now to Figure 3, the mould 10 of Figure 2 is illustrated in cross-section taken along line 3-3. The mould 10 has a cavity 12, which is stationary and a core 14 which is moveable relative to the cavity 12. The cavity 12 may also be moveable relative to the core 14. The mould 10 is illustrated in a closed position while a vehicle panel 16 is being formed. The vehicle panel has an appearance portion or visible side 21 and a concealed portion or back side 23.

The cavity 12 has a very smooth first forming surface 20 for cooperating with a second forming surface 22 of the core 14. The first forming surface 20 may be a polished surface. The first forming surface 20 of the cavity 12 and the second forming surface 22 collectively provide an outer boundary for the vehicle panel 16. In another embodiment, three or more forming surfaces are provided to collectively define the outer boundary of a vehicle panel. Heated resin flows over the first forming surface 20 and the second forming surface 22 to fabricate a vehicle panel 16. The heated resin may be introduced into the mould 10 in any suitable known manner.

The second forming surface 22 of the core 14 is free of any protuberances such as ancillary structural elements, any features that are not required for an appearance of an exposed, visible side 21 of the vehicle panel 16 or any changes in a concealed side 23 without corresponding changes in the exposed, visible side 21. The protuberance free second forming surface 22 allows heated resin to freely flow over the second forming surface 22 without disturbance.

Since the heated resin flows without disturbance over the second forming surface 22, the vehicle panel 16 formed in the mould 10 is free of visible knit lines, flow lines and sink marks on the exposed, appearance portion in the form of visible side 21 of the vehicle panel 16. Ideal surface characteristics for the visible side 21 are, a smooth blemish free surface with minimal surface irregularities and is desired so that the vehicle panel 16 is visually pleasing.

The exposed, visible side 21 is visible when mounted on a vehicle. To produce the visually pleasing vehicle panel 16, the design of the second forming surface 22 eliminates all protuberances formed in the second forming surface 22, including any ancillary structural elements. Examples of ancillary structural elements include, but are not limited to, brackets, ribs, gussets, bosses, connecting members, retention members, fasteners, and/or push-pins. The ancillary structural elements are separately formed and welded to the vehicle panel at a welding station, which is illustrated in Figure 4 and generally referenced by numeral 18.

Referring to Figure 4, a laser welding station 18 is illustrated as one example of a welding station. It will be appreciated that any suitable welding station is contemplated within the scope of the present invention. The laser welding station 18 has a robot 25 to support a laser welding end effecter 27. The laser welding station 18 has a first weld fixture 29 to support a vehicle panel 16 and a second weld fixture 31 to support an ancillary structural component 24. It will be appreciated that any suitable first and second weld fixtures may be used. The laser end effecter 27 on the robot 25 produces a laser beam 33 to produce a weld zone 35 between the vehicle panel 16 and the ancillary structural component 24. The laser 27 may rotate about the second weld fixture 31, as indicated by an arcuate arrow, to adequately join the vehicle panel 16 and the ancillary structural component 24.

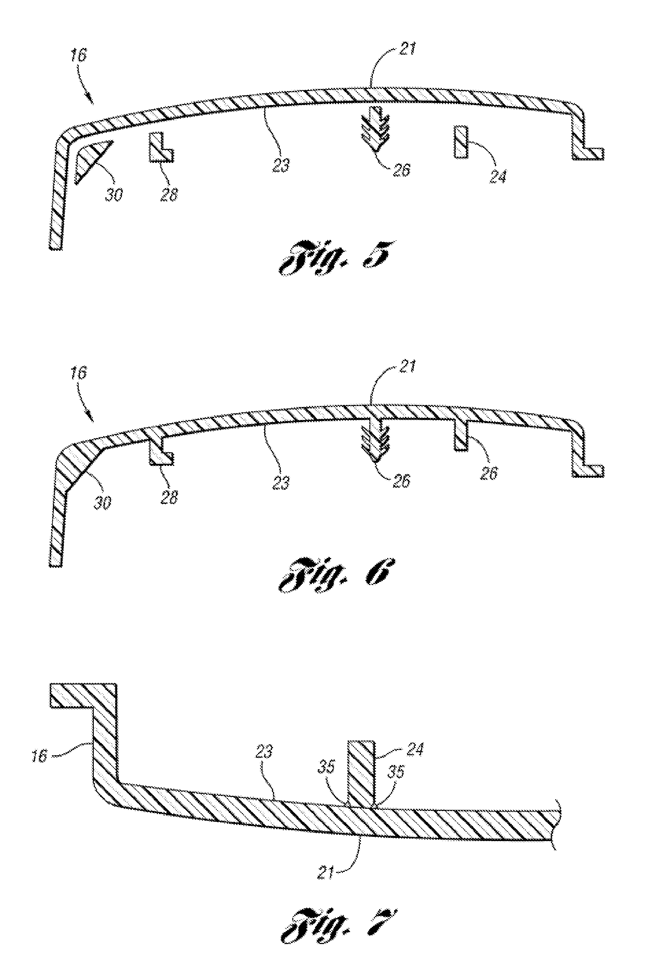

With reference to Figure 5, a vehicle panel 16 formed in the mould 10 of Figures 1-3 and ancillary structural components 24 to 30 are illustrated.

One ancillary structural component is a rib 24, which extends along a length of the vehicle panel 16.

Another ancillary structural component is a connecting member 24 to connect the vehicle panel 16 to the vehicle once the connecting member 24 is welded to the vehicle panel 16.

A further ancillary structural component 26 is a push-pin 26 (fir tree retainer). The push-pin 26 facilitates retention of the vehicle panel 16 on a vehicle once the push-pin 26 is welded to the vehicle panel 16.

Another ancillary structural component 28 is a bracket 28. The bracket 28 is utilized to removably attach the vehicle panel 16 to a vehicle once the bracket 28 is welded to the vehicle panel 16.

Yet another ancillary structural component 30 is a gusset 30. The gusset 30 supports a corner of the vehicle panel 16 once the gusset 30 is welded to the vehicle panel 16.

It will be appreciated that more or less ancillary components may be fastened to the panel 16 depending upon the application.

As discussed above, the vehicle panel 16 is formed free of protuberances on the concealed side 23 to facilitate ideal surface characteristics on the exposed, visible side 21. Since the vehicle panel 16 is formed without protuberances on the concealed side 23, the ancillary structural components 24-30 are not integrally formed with the vehicle panel 16.

In one embodiment, the ancillary structural components 24-30 are individually moulded. The ancillary structural components 24-30 may be injection-moulded, compression-moulded, vacuum-moulded or extruded. The ancillary structural components 24-30 may be fabricated in any suitable known manner so that the ancillary structural components 24-20 may be welded to the vehicle panel 16.

The ancillary structural components may be, but are not limited to being brackets, ribs, gussets, bosses, connecting members, retention members, fasteners, and/or push-pins. Any known ancillary structural components may be utilized within the scope of the present invention. In one embodiment, a plurality of structural components is provided and the plurality of structural components are all welded to the vehicle panel 16. The ancillary structural components may be all identical, may differ in size and/or shape, or may be varying amounts of differing types altogether of ancillary structural components.

In one embodiment, the ancillary structural components 24-30 are formed while the vehicle panel 16 is produced. In another embodiment, the ancillary structural components 24-30 are fabricated at a different time and/or place from the vehicle panel 16. The vehicle panel 16 is suitably transported from the mould 10 to the welding station 18, as illustrated in Figure 4. The ancillary structural components 24-30 are transported to the welding station 18 where the ancillary structural components 24-30 are welded to the vehicle panel 16.

In one embodiment, the ancillary structural components 24-30 are laser welded to the vehicle panel 16. In another embodiment, the ancillary structural components 24-30 are friction welded to the vehicle panel. Any known laser welding, friction welding or other thermoplastic joining station may be utilized so that the vehicle panel 16 and the ancillary structural components 24-30 are joined together, as depicted in Figure 6. Any known manner of joining preformed ancillary structural components 24-30 to the preformed vehicle panel 16 is contemplated within the scope of the present invention.

To weld the vehicle panel 16 and the ancillary structural components 24-30 together, both the vehicle panel 16 and the ancillary structural components 24-30 should have overlapping melting temperatures. In one embodiment, the overlapping melting temperatures of the vehicle panel 16 and the ancillary structural components 24-30 correspond with a temperature the welding station produces when the vehicle panel 16 and ancillary structural components 24-30 are placed under a laser of the laser welding station for a specified period of time.

Referring now to Figure 7, an enlarged partial view of a vehicle panel 16 is illustrated joined together with an ancillary structural component 24. A weld zone 35 exists between the vehicle panel 16 and the ancillary structural component 24 that does not disrupt the exposed, visible side 21 of the vehicle panel 16. An adequate penetration weld may be employed so that the weld does not alter the finish of an exposed, visible side 21 of the vehicle panel 16.

Therefore in summary, a method for creating a moulded-in-colour panel in a mould is disclosed. The method includes providing a mould having a first mould member and a second mould member. One of the first mould member and the second mould member has an appearance portion forming surface and the other of the first mould member and the second mould member has a concealed portion forming surface corresponding with the appearance portion forming surface. The concealed portion forming surface forms a concealed portion of a panel and is free of any protuberances and ancillary structural members for facilitating ideal surface characteristics of an appearance portion of the panel. Moulded-in-colour resin is injected in the mould and cooled to form a moulded-in-colour panel. At least one ancillary structural member is welded to the concealed portion of the panel.

In another embodiment, a moulded-in-colour panel is disclosed. The moulded-in-colour panel is formed providing a mould having a first mould member and a second mould member. One of the first mould member and the second mould member has an appearance portion forming surface and the other of the first mould member and the second mould member has a concealed portion forming surface corresponding with the appearance portion forming surface for forming a concealed portion of a panel. The concealed portion forming surface is free of any protuberances and ancillary structural members for facilitating ideal surface characteristics of an appearance portion of the panel. Moulded-in-colour resin is injected in the mould and the moulded-in-colour resin is cooled to form a moulded-in-colour panel. At least one ancillary structural member is welded to the concealed portion of the panel.

In another embodiment, a system for creating a moulded-in-colour element in a mould is disclosed. The system has an injection moulding machine having a first mould member and a second mould member. One of the first mould member and the second mould member has an appearance portion forming surface and the other of the first mould member and the second mould member has a concealed portion forming surface corresponding with the appearance portion forming surface for forming a concealed portion of a panel. The concealed portion forming surface is free of any protuberances and ancillary structural members for facilitating ideal surface characteristics of an appearance portion of the panel. Moulded-in-colour resin can be injected in the mould at a sufficient flow rate so that the moulded-in-colour resin flows without disruption over the first mould member and second mould member to form a moulded-in-colour element to facilitate ideal surface characteristics of the appearance portion of the moulded-in-colour element. The system includes a laser welding station to weld at least one accessory on the moulded-in-colour element.

It will be appreciated by those skilled in the art that although the invention has been described by way of example with reference to one or more embodiments it is not limited to the disclosed embodiments and that one or more modifications to the disclosed embodiments or alternative embodiments could be constructed without departing from the scope of the invention as set out in the appended claims.

## Claims

1. A method for manufacturing a moulded-in-colour panel (16) the method comprising providing a mould (10) having a first mould member (12) and a second mould member (14) wherein one of the first mould member and the second mould member has an appearance portion forming surface (20)and the other of the first mould member and the second mould member has a concealed portion forming surface (22) corresponding to the appearance portion forming surface (20) for forming a concealed portion (23) of the moulded-in colour panel (16), injecting moulded-in-colour resin into the mould (10) and cooling the moulded-in-colour resin to form a moulded-in-colour panel (16) **characterised in that** the concealed portion forming surface (22) has a substantially smooth surface free from surface discontinuities so as to minimise surface disturbances in the appearance portion (21) of the panel (16) and the method further comprises attaching at least one ancillary structural member (24, 26, 28, 30) to the concealed portion (23) of the moulded-in-colour panel (16) after moulding of the moulded-in-colour panel (16) is complete.

2. A method as claimed in claim 1 wherein the method further comprises ejecting the moulded-in-colour panel (16) from the mould (10) before attaching the at least one ancillary structural member (24, 26, 28, 30) to the concealed portion (23) of the moulded-in-colour panel (16).

3. A method as claimed in claim 1 or in claim 2 wherein the method further comprises forming the at least one ancillary structural member (24, 26, 28, 30) ready for attachment to the concealed portion (23) of the moulded-in-colour panel (16).

4. A method as claimed in claim 3 wherein forming comprises injection moulding the at least one ancillary structural member (24, 26, 28, 30).

5. A method as claimed in any of claims 1 to 4 wherein attaching at least one ancillary structural member (24, 26, 28, 30) to the concealed portion (23) of the moulded-in-colour panel (16) comprises laser welding the at least one ancillary structural member (24, 26, 28, 30) to the concealed surface (23) of the moulded-in-colour panel (16).

6. A method as claimed in claim 5 wherein the method further comprises conveying the moulded-in-colour panel (16) to a welding station (18) to weld the at least one ancillary structural member (24, 26, 28, 30) to the concealed portion (23) of the moulded-in-colour panel (16).

7. A method as claimed in any of claims 1 to 6 wherein the mould (10) has a cavity as the first mould member (12) and a core as the second mould member (14) and the cavity has a very smooth forming surface (20) for forming the appearance portion (21) of the moulded-in-colour panel (16) and the core has a generally smooth forming surface (22) for forming the concealed portion (23) of the moulded-in-colour panel (16).

8. A moulded-in-colour panel **characterised in that** the moulded-in-colour panel (16) is formed by a method as claimed in any of claims 1 to 7.

9. A moulded-in-colour panel wherein the moulded-in-colour panel is a moulded-in-colour exterior panel for a motor vehicle.

10. A system for manufacturing a moulded-in-colour element in a mould, the system comprising an injection moulding machine having a first mould member and a second mould member wherein one of the first mould member and the second mould member has an appearance portion forming surface (20) and the other of the first mould member and the second mould member has a concealed portion forming surface (22) corresponding with the appearance portion forming surface (20) for forming a concealed portion (23), **characterised in that** the system further comprises a laser welding station (18) to weld after moulding of the moulded-in-colour element at least one ancillary member (24, 26, 28, 30) to the concealed portion (23) of the moulded-in-colour element (16) and that the concealed portion forming surface(22) is substantially free of any surface discontinuities so that when moulded-in-colour resin is injected into the mould (10) it can flow freely without disruption over the first mould member and the second mould member so as to form the moulded-in-colour element (16) with ideal surface characteristics on the appearance portion (21) of the moulded-in-colour element (16).

11. A method of moulding a moulded-in-colour panel comprising:
providing a mould having a first mould member and a second mould member wherein one of the first mould member and the second mould member has an appearance portion forming surface and the other of the first mould member and the second mould member has a concealed portion forming surface corresponding with the appearance portion forming surface for forming a concealed portion of a panel, the concealed portion forming surface being free of any protuberances and ancillary structural members for facilitating ideal surface characteristics of an appearance portion of the panel;
injecting moulded-in-colour resin in the mould;
cooling the moulded-in-colour resin to form a moulded-in-colour panel; and
welding at least one ancillary structural member to the concealed portion of the panel.

12. The method of claim 11, further comprising injecting moulded-in-colour metallic resin.

13. The method of claim 11 or 12, further comprising laser welding the at least one ancillary structural member to the back surface of the moulded-in-colour panel.

14. The method of claim 11 to 13, further comprising injection moulding the at least one ancillary structural member prior to welding the at least one ancillary structural member to the back surface of the moulded-in-colour panel.

15. The method of claim 11 to 14, further comprising ejecting the moulded-in-colour panel before welding the at least one ancillary structural member to the back surface of the moulded-in-colour panel.
